# EUROPÄISCHE PATENTSCHRIFT

(11) **EP 3 339 903 B1**
(45) Veröffentlichungstag und Bekanntmachung des Hinweises auf die Patenterteilung: **06.12.2023**
(21) Anmeldenummer: 16206256.6
(22) Anmeldetag: 22.12.2016
(51) Int. Cl.: G01S 19/21, G01S 19/33, G01S 19/39, G07B 15/06

(54) **VERFAHREN, SYSTEM, VORRICHTUNG UND COMPUTERPROGRAMMPRODUKT ZUR SIGNALISIERUNG EINER FEHLFUNKTION ODER DROHENDEN FEHLFUNKTION EINER POSITIONSBESTIMMUNGSVORRICHTUNG, SOWIE GEBÜHRENERHEBUNGSSYSTEM**
METHOD, SYSTEM, DEVICE AND COMPUTER PROGRAM PRODUCT FOR SIGNALLING A MALFUNCTION OR IMPENDING MALFUNCTION OF A POSITION DETECTING APPARATUS, AND FEE CHARGING SYSTEM
PROCÉDÉ, SYSTÈME, DISPOSITIF ET PRODUIT-PROGRAMME INFORMATIQUE DE SIGNALISATION D'UN DYSFONCTIONNEMENT OU D'UN DYSFONCTIONNEMENT IMMINENT D'UN DISPOSITIF DE DÉTERMINATION DE POSITION, ET SYSTÈME DE PÉAGE

(43) Veröffentlichungstag der Anmeldung: 27.06.2018
(73) Patentinhaber: Toll Collect GmbH, 10785 Berlin (DE)
(72) Erfinder: Böhme, Nils, 14471 Potsdam (DE); Slizewski, Zbigniew, 10829 Berlin (DE); Manojlovic, Ognjen, 10439 Berlin (DE)
(74) Vertreter: adares Patent- und Rechtsanwälte Reininger & Partner GmbB

(56) Entgegenhaltungen:
- EP-A2- 2 908 454
- WO-A1-2015/002226
- WO-A2-2009/090515
- WO-A2-2014/158297
- CN-B- 102 176 031
- Van Sickle Jan: "GEOG 862GPS and GNSS for Geospatial Professionals: Lesson 2 - The Navigation Solution", The Pennsylvania State University, 1 January 2020 (2020-01-01), XP055957846, Retrieved from the Internet: URL:https://www.e-education.psu.edu/geog86 2/node/1724 [retrieved on 2022-09-05]
- Van Sickle Jan: "GEOG 862GPS and GNSS for Geospatial Professionals: Lesson 1 - One-way Ranging", The Pennsylvania State University, 1 January 2020 (2020-01-01), XP055957848, Retrieved from the Internet: URL:https://www.e-education.psu.edu/geog86 2/node/1733 [retrieved on 2022-09-05]

## Beschreibung

Die Erfindung betrifft ein Verfahren zur Sgnalisierung einer Fehlfunktion oder einer drohenden Fehlfunktion einer Positionsbestimmungsvorrichtung, insbesondere zur Sgnalisierung einer drohenden mangelnden Betriebsfähigkeit oder einer Störung beispielsweise aufgrund von Störsignalen. Ferner betrifft die Erfindung ein zugehöriges Sgnalisierungssystem, ein Gebührenerhebungssystem, eine Positionsbestimmungsvorrichtung und ein Computerprogram mprodukt.

Eine Positionsbestimmungsvorrichtung bildet die zentrale Komponente sowohl eines Navigationssystems, als auch eines elektronischen Mautsystems. Bei letzterem handelt es sich um ein Gebührenerhebungssystem, welches die von einem Fahrzeug benutzten Straßen oder andere Verkehrsstrukturen wie Brücken und Tunnel bzw. die durch das Fahrzeug auf diesen Strukturen zurückgelegten Strecken ermittelt und darauf basierend den Fahrzeughalter eine entsprechende Mautrechnung zukommen lässt.

Eine satellitengestützte Positionsbestimmungsvorrichtung ermittelt Positionen eines Fahrzeuges mittels eines globalen Navigationssatellitensystems (GNSS), welches durch eine Vielzahl an Navigationssatelliten gebildet wird, die jeweils fortlaufend ein Navigationssignal, kurz Sgnal, aussenden. Mittels eines GNSS-Empfängers werden Sgnale mehrerer der Navigationssatelliten empfangen und ausgewertet, um daraus die genaue Position zu berechnen. Für die Bestimmung einer Position in einer bekannten Höhe über oder auf der Erdoberfläche reichen Sgnale von 3 Satelliten aus. Sgnale von 4 Satelliten sind dann notwendig, wenn zusätzlich zur Längen- und Breitenkoordinate einer Position auch die Höhe der Position über der Erdoberfläche bestimmt werden soll. Üblicherweise sind beispielsweise beim GPS-System von jeder Position der Erde ausjederzeit etwa 6-10 Navigationssatelliten "sichtbar".

Eine in einem Fahrzeug installierte Positionsbestimmungsvorrichtung wird auch als On-Board Unit (OBU) oder als Fahrzeuggerät (FzG) bezeichnet. Aufgrund von Materialermüdung, Alterung, fehlerhaftem Einbau, externen Einflüssen und dergleichen, kann die Qualität der Positionsbestimmung im Laufe der Zeit abnehmen. Das zeigt sich im Extremfall dadurch, dass die Positionsbestimmung irgendwann plötzlich nicht mehr durchgeführt werden kann. Es wird dann von einer sogenannten " Nichterkennung" gesprochen. Je nach Ausführung und Einstellung des FzG wird dem Fahrzeughalter eine einzelne Nichterkennung oder die Häufung solcher Ereignisse gemeldet. Ist die Positionsbestimmungsvorrichtung Teil eines Gebührenerhebungssystems, dann wird der Fahrzeughalter in der Regel aufgefordert, das FzG zeitnah überprüfen zu lassen.

Um die Genauigkeit und Zuverlässigkeit der Positionsbestimmung zu erhöhen, sind Positionsbestimmungsvorrichtungen bekannt, welche Navigationssignale von Satelliten empfangen und auswerten können, die zu unterschiedlichen GNSS-Systemen gehören. Eine solche Positionsbestimmungsvorrichtung wird beispielsweise in DE 10 2011 106 589 A1 offenbart. Hierbei kann die Positionsbestimmungsvorrichtung entweder die Sgnale eines der GNSS-Systeme für die Positionsbestimmung nutzen und das andere GNSS-System lediglich im Notfall nutzen, um die Verfügbarkeit der Positionsbestimmung zu verbessern, oder sie kann beide GNSS-Systeme gleichzeitig für die Positionsbestimmung nutzen, um die Positionsauflösung zu erhöhen.

Weiterhin ist aus der CN 102176031 Bein Verfahren bekannt, bei dem eine Zeitdifferenz zur Detektion eines Fehlers in einer Empfänger-Integrität unter Verwendung eines GPS-/ Galileo-Navigationssatellitensystems eingesetzt wird. Dabei wird davon ausgegangen, dassjedes Satellitensystem seine eigene Zeit hat und eine Differenz zwischen ihnen vorhergesagt werden kann. Diese Differenz kann als Hilfsinformation in einen Selbstüberwachungsalgorithmus des Empfängers eingesetzt werden, um einen Fehler auf Basis historischer Differenz-Daten zu detektieren.

WO2015/ 002226 A1 offenbart eine Positionsbestimmungsvorrichtung, die in einem Fahrzeug installiert ist und ausgebildet ist, unter Verwendung von GNSS eine Position des Fahrzeugs zu bestimmen. Dabei wird mittels eines Satellitensignals ein Erstpositionswert zu einer ersten Zeit ermittelt und mittels eines Radiosignals ein Zweitpositionswert zu einer zweiten Zeit ermittelt, um ein Spoofing zu detektieren.

WO 2014/ 158297 A2 beschreibt ein Verfahren zur Überprüfung einer GNSS-Integrität zur Detektion einer Zeitsignalmanipulation. Dabei wird ein GNSS-Sgnal eines ersten GNSS-Signals zu einer ersten Zeit und ein zweites GNSS-Sgnal zu einer zweiten Zeit empfangen und ein Phasenfehler zwischen dem ersten Zeitsignal und dem zweiten Zeitsignal ermittelt und beispielsweise mit einem Schwellenwert verglichen, um eine Manipulation zu detektieren. Wenn sich der Phasenfehler ändert, wird festgestellt, dass eines der GNSS-Signale manipuliert wurde.

EP 2 908 454 A2 beschreibt Verfahren, bei denen von verschiedenen GNSS-Systemen ein erster Datensatz und ein zweiter Datensatz empfangen werden, um Spoofing anhand einer Interferenz in einer Sgnalinformation zu detektieren. Dazu werden ein zu überprüfender Datensatz mit einem bekannten Datensatz verglichen. Zudem kann ein Datensatz auch von einer validierten Quelle wie der Cäsium-Atomuhr erhalten werden, um mit einem zu überprüfenden Datensatz verglichen zu werden.

Es ist Aufgabe der Erfindung, ein Verfahren bereitzustellen, mit der eine Fehlfunktion einer Positionsbestimmungsvorrichtung mit hoher Scherheit aber mit geringem zusätzlichen Materialaufwand erkannt werden kann.

Wünschenswert ist es zudem, wenn die Fehlfunktion bereits vor dem Auftreten des völligen Versagens der Positionsbestimmung signalisiert wird. Es ist weiterhin Aufgabe der Erfindung, zu diesem Zweck ein Sgnalisierungssystem, ein Gebührenerhebungssystem, eine Positionsbestimmungsvorrichtung und ein Computerprogrammprodukt bereitzustellen.

Die Aufgabe wird gemäß der Erfindung durch ein Verfahren mit den Merkmalen des Anspruchs 1, durch ein Sgnalisierungssystem mit den Merkmalen des Anspruchs 7, durch ein Gebührenerhebungssystem mit den Merkmalen des Anspruchs 11, durch eine Positionsbestimmungsvorrichtung mit den Merkmalen des Anspruchs 12 und durch ein Computerprogrammprodukt mit den Merkmalen des Anspruchs 13 gelöst. Vorteilhafte Weiterbildungen der Erfindung sind in den Unteransprüchen aufgeführt.

Die Erfindung beruht auf der Überlegung, dass unterschiedliche GNSS-Systeme jeweils eine eigene Systemzeit aufweisen, die zueinander in einem bekannten bzw. ermittelbaren festen Verhältnis stehen. Anders ausgedrückt: Aus den Navigationssignalen eines ersten GNSS-Satellitensystems lässt sich eine erste Uhrzeit ableiten und aus den Navigationssignalen eines zweiten GNSS-Satellitensystems lässt sich eine zweite Uhrzeit ableiten. Diese zwei Uhrzeiten können miteinander verglichen werden, um die Zuverlässigkeit der auf den Navigationssignalen basierenden Positionsbestimmung zu prüfen. Als Uhrzeit wird im Snne der Erfindung insbesondere jede absolute Zeitangabe in Einheiten von Jahren, Monaten, Wochen, Tagen, Stunden, Minuten, Sekunden und/ oder Sekundenbruchteilen sowohl einzeln als auch in Kombination zu einer vollständigen Zeitangabe verstanden.

In der Positionsbestimmungsvorrichtung dient ein GNSS-Empfänger dazu, GNSS-Sgnale von Navigationssatelliten zu empfangen. Die empfangenen Sgnale werden dann analysiert, um die Position des GNSS-Empfängers, und somit die Position der Positionsbestimmungsvorrichtung bzw. des Fahrzeuges zu bestimmen, in oder an dem die Positionsbestimmungsvorrichtung angeordnet ist. Geht man von nur einem GNSS-System aus, dann sind Sgnale von mindestens vier Satelliten notwendig, um die vollständige Position, also alle drei Raumkoordinaten bzw. Ortskoordinaten der Positionsbestimmungsvorrichtung und die Systemzeit des GNSS-Systems zu errechnen. Liegen dem GNSS-Empfänger bzw. der Positionsbestimmungsvorrichtung weitere Informationen vor, beispielsweise mittels eines internen oder externen Zeitgebers ermittelte Zeitinformationen, dann reichen unter bestimmten Umständen Sgnale lediglich dreier Satelliten, um die vollständige Position zu ermitteln. In diesem Fall wird die Zeit vom Zeitgeber bereitgestellt. Wenn andererseits eine Raumkoordinate der Positionsbestimmungsvorrichtung oder eine Oberfläche bekannt ist, auf der sich die Positionsbestimmungsvorrichtung bewegt (beispielsweise die Meeresoberfläche, wenn sich die Positionsbestimmungsvorrichtung auf einem Schiff befindet), dann reichen Signale dreier Satelliten, um die genaue Position und die Systemzeit zu ermitteln. Mit einem von der Positionsbestimmungsvorrichtung umfassten Zeitgeber genügen dazu die Sgnale zweiter Satelliten. Um die Messgenauigkeit zu erhöhen, sind in diesem Fall möglicherweise weitere Informationen notwendig, welche entweder mittels zusätzlicher Sensoren ermittelt werden, beispielsweise die Entfernung der Positionsbestimmungsvorrichtung von einem Fixpunkt, z.B. von einer Funkbake, und/ oder welche als Randbedingungen in die Auswertung mit einfließen, beispielsweise die Tatsache, dass die Positionsbestimmungsvorrichtung einem Straßenverlauf folgen muss.

Ist schließlich die genaue Position des GNSS-Empfängers bzw. der Positionsbestimmungsvorrichtung bekannt, dann kann aus dem Sgnal eines einzigen Satelliten die Systemzeit ermittelt werden. Dies kann beispielsweise mithilfe einer sogenannten Bake bzw. Funkbake vonstatten gehen. Hierbei handelt es sich um eine straßenseitige Sendevorrichtung. Wenn das Fahrzeug die Bake passiert und somit ein Funksignal der Bake empfängt, dann kann dies zu einem Triggern des Empfangs der Erstsignale und Zweitsignale und/ oder des daraus Ableitens der Uhrzeiten führen. Ist die genaue Position der Bake bekannt, dann hat das zur Folge, dass zum Trigger-Zeitpunkt auch die Position des Fahrzeuges bekannt ist, so dass aus dem Sgnal eines einzigen Satelliten eine Uhrzeit abgeleitet werden kann.

Die mittels des GNSS-Empfängers empfangenen Navigationssignale des ersten GNSS-Satellitensystems werden nachfolgend Erstsignale genannt. Dementsprechend werden die empfangenen Navigationssignale des zweiten GNSS-Satellitensystems als Zweitsignale bezeichnet. Jeder Satellit des ersten GNSS-Satellitensystems sendet hierbei ein Erstsignal aus. Das bedeutet, dass das Erstsignal aus einem Trägersignal besteht, auf dem die für Uhrzeitableitung notwendigen Daten der Navigationsnachricht aufmoduliert sind. Diese Navigationsnachricht wiederholt sich (mit entsprechend veränderten Inhalten) in regelmäßigen Abständen in dem Erstsignal. Um die erste Uhrzeit aus dem Erstsignal abzuleiten, muss das Erstsignal analysiert werden. Dies bedeutet insbesondere, dass die im Trägersignal enthaltene Navigationsnachricht zumindest teilweise mittels einer Demodulation ermittelt werden muss. Hierbei kann die Ableitung der ersten Uhrzeit aus der Navigationsnachricht oder einem Teil der Navigationsnachricht erfolgen. Alternativ können eine Reihe an mehreren aufeinander folgenden ersten Uhrzeiten von verschiedenen Navigationsnachrichten verschiedener Satelliten berücksichtigt werden, beispielsweise mittels einer Mittelwertbildung.

Für die Ableitung der ersten Uhrzeit kann also ein einzelnes Erstsignal eingesetzt werden, welches von einem einzelnen Satelliten des ersten GNSS-Satellitensystems stammt. Alternativ können mehrere Erstsignale empfangen und analysiert werden, welche von zwei oder mehr solchen Satelliten stammen. Entsprechendes gilt für das Zweitsignal oder die Zweitsignale, die von einem einzigen oder von mehreren Satelliten des zweiten GNSS-Satellitensystems stammen können. Dies bedeutet dementsprechend, dass die erste Uhrzeit zu einem bestimmten Zeitpunkt aus einem oder mehreren Erstsignalen abgeleitet sein kann, welche von einem einzigen oder von mehreren Satelliten des ersten GNSS-Satellitensystems stammen. Wird die erste Uhrzeit zu einem späteren Zeitpunkt erneut ermittelt, so kann sie aus einem oder mehreren Erstsignalen abgeleitet sein, welche von einem oder mehreren anderen Satelliten desselben GNSS-Satellitensystems stammen.

Das Ableiten der ersten Uhrzeit aus den Erstsignalen kann derart erfolgen, dass aus den Nutzdaten der Navigationsnachricht eines oder mehrerer Erstsignale mitgesendete Zeitinformationen entnommen und weiterverarbeitet werden. Beispielsweise enthält ein Satellitensignal des GPS-Systems wenigstens ein eigenes Datenfeld für solche Zeitinformationen (TOW für den Zeitzählerstand der GPS-Systemzeit innerhalb der aktuellen Woche im Kopf eines jeden Unterrahmens, WN für die Wochennummer der GPS-Systemzeit im Unterrahmen 1 jeder Seite). Zur Berechnung der Koordinierten Weltzeit UTC (Universal Time Coordinated) enthält die GPS-Navigationsnachricht im Unterrahmen 4 von Seite 18 die aktuelle, durch Schaltsekunden bedingte, Differenz zwischen der GPS-Systemzeit und der Koordinierten Weltzeit. Besonders bevorzugt ist die abgeleitete erste Uhrzeit die vom (ersten) GNSS, Empfänger aus den Zeitinformationen der Navigationsnachricht wenigstens eines Erstsignals bestimmte UTC einschließlich Datum. Es kann ausreichen, die genannten Zeitinformationen eines Erstsignals eines einzelnen Satelliten für das hier beschriebene Verfahren zu nutzen, oder es können die Zeitinformationen aus mehreren Erstsignalen genutzt werden, beispielsweise um einen Uhrzeit-Mittelwert als erste Uhrzeit zu bilden.

Wenngleich diese in den Nutzdaten jedes Satellitensignals mit enthaltene Zeitinformation noch um diverse Korrekturwerte korrigiert werden muss, um die genaue Uhrzeit am Empfänger zu erhalten oder um Sendezeitdifferenzen unterschiedlicher Satelliten auszugleichen, ist es erfindungsgemäß ausreichend, solch eine Zeitinformation unmittelbar als erste Uhrzeit zu verwenden und verfahrensgemäß mit einer zugehörigen zweiten Uhrzeit zu vergleichen. Dies ist insbesondere dann der Fall, wenn es darum geht, Störungen und Fehlfunktionen festzustellen, die plötzlich auftreten, wie beispielsweise das Einschalten eines Spoofing-Signals. In einer solchen Stuation findet sich die Störung auch im Differenzwert zwischen den beiden Uhrzeiten wieder, so dass es auf die genaue erste oder zweite Uhrzeit selbst nicht so sehr ankommt.

Nicht erfindungsgemäß kann das Auswerten der ersten Uhrzeit aus den Erstsignalen beispielsweise derart erfolgen, dass die vom (ggf. ersten) GNSS-Empfänger bereitgestellten Ausgabedaten ausgewertet werden. Diese Ausgabedaten umfassen üblicherweise Zeit- und Positionsinformationen, die der GNSS-Empfänger aus den Erstsignalen abgeleitet hat. Insbesondere kann es sich um Ausgabedaten in einem sogenannten NMEA-Format handeln, wobei NMEA die Abkürzung für "National Marine Electronics Association" ist. Hier ist der NMEA-0183-Standard von besonderer Bedeutung, der ein ASCII-Format mit einem seriellen Kommunikationsprotokoll verwendet. Die durch den (ggf. ersten) GNSS-Empfänger aus wenigstens einem Erstsignal abgeleitete Uhrzeit (UTC) ist beispielsweise zusammen mit einer Datumsangabe, die ganz generell ebenfalls als erste Uhrzeit oder als Teil der ersten Uhrzeit angesehen werden kann, vom ZDA-Datensatz des NMEA-Formats umfasst.

Alle vorangehend hinsichtlich der Auswertung und/ oder Ableitung der ersten Uhrzeit beschriebenen Überlegungen und Vorkehrungen können auch beim Bestimmen der zweiten Uhrzeit zum Einsatz kommen.

Bei dem ersten und dem zweiten GNSS-Satellitensystem handelt es sich um zwei unterschiedliche GNSS-Satellitensysteme, welche zur Navigationsunterstützung geeignet sind. Bereits etabliert oder in Aufbau befinden sich zurzeit die Systeme Global Positioning System (GPS, auch unter NAVSTAR GPS bekannt), GLONASS, Galileo und Beidou. Andere GNSS, Satellitensysteme können mit einbezogen werden, soweit es möglich ist, aus den von ihnen versendeten Navigationssignalen eine Systemzeit des GNSS-Satellitensystems abzuleiten. Der GNSS-Empfänger ist also ausgebildet, Navigationssignale zweier unterschiedlicher GNSS-Satellitensysteme empfangen zu können. Hierzu weist der GNSS-Empfänger vorzugsweise zwei Empfangsantennen auf, die jeweils für den Frequenzbereich des zugehörigen GNSS-Satellitensystems ausgelegt oder optimiert sind. Bevorzugterweise sind zwei oder mehr GNSS-Empfänger -d. h. ein erster GNSS-Empfänger zum Empfang von Erstsignalen des ersten GNSS-Satellitensystems und wenigstens ein zweiter GNSS-Empfänger zum Empfang von Zweitsignalen des zweiten GNSS-Satellitensystems-vorgesehen, die als Teilempfänger zusammen den erfindungsgemäßen GNSS-Empfänger bilden.

Vorzugsweise werden das Erstsignal oder die Erstsignale und das Zweitsignal oder die Zweitsignale zeitgleich oder hinreichend zeitgleich durch den/die GNSS-Empfänger empfangen. Das bedeutet, es handelt sich um Sgnale, die hinreichend gleichzeitig an dem/den GNSS-Empfänger/n bzw. an dessen Antenne(n) ankommen. Das Maß der hinreichenden Gleichzeitigkeit des Signalempfangs ist vorzugsweise dann erfüllt, wenn ein Erstsignal oder mehrere Erstsignale und ein Zweitsignal oder mehrere Zweitsignale innerhalb eines Zeitrahmens empfangen wurden, der der Summe der (einfachen bei einem Erstsignal und doppelten bei mehreren Erstsignalen) Dauer eines ersten Datenrahmens eines Erstsignals und der (einfachen bei einem Zweitsignal und doppelten bei mehreren Zweitsignalen) Dauer eines zweiten Datenrahmens eines Zweitsignals entspricht.

Dabei wird unter einem Datenrahmen derjenige Datensatz verstanden, von dem einige bestimmte Datenelemente in einem folgenden Datenrahmen wiederholt werden. Bezüglich den Datenelementen, die inhaltlich dem sendenden Satelliten zuzuordnen sind (Zeitkorrekturwerte, Ephemeriden), besitzen beispielsweise die Datenrahmen des GPS-Systems eine Dauer von 30 Sekunden und die Datenrahmen des Glonass-Systems eine Dauer von 150 Sekunden (das ist jeweils eine sogenannte Seite der Navigationsnachricht), wodurch der Zeitrahmen des hinreichend gleichzeitigen Empfangs auf 3 Minuten (6 Minuten bei jeweils mehreren Sgnalen) festgelegt ist; bezüglich den Datenelementen, die inhaltlich dem GNSS-System als Ganzes zuzuordnen sind (Almanachdaten aller aktiven Satelliten) besitzen beispielsweise die Datenrahmen des GPS-Systems und des Glonass-Systems jeweils eine Dauer von 12,5 Minuten (das ist jeweils die Länge der gesamten Navigationsnachricht (25 Seiten im GPS-System, 5 Seiten im Glonass-System) eines Satelliten des jeweiligen Systems), wodurch der Zeitrahmen des hinreichend gleichzeitigen Empfangs auf 25 Minuten (50 Minuten bei jeweils mehreren Sgnalen) festgelegt ist.

Gemäß einer bevorzugten Ausführungsform ist die erste Uhrzeit eine Systemzeit des ersten GNSS-Satellitensystems. Gleichermaßen kann die zweite Uhrzeit eine Systemzeit des zweiten GNSS-Satellitensystems sein. Alternativ können die Uhrzeiten auch aus den jeweiligen Systemzeiten abgeleitete Zeiten sein. Es kann sich beispielsweise um korrigierte Systemzeiten handeln, bei denen z.B. Schaltsekunden nachträglich hinzugerechnet wurden.

Die abgeleiteten Uhrzeiten werden erfindungsgemäß ausgewertet. Dies kann beispielsweise nicht erfindungsgemäß geschehen, indem die beiden abgeleiteten Uhrzeiten mit einer Uhrzeit eines internen oder externen Zeitgebers, beispielsweise mit einer von einer Atomuhr gelieferten Uhrzeit verglichen werden. Das Auswerten der ersten Uhrzeit und der zweiten Uhrzeit umfasst jedoch erfindungsgemäß ein Vergleichen der ersten Uhrzeit mit der zweiten Uhrzeit, wobei entschieden wird, eine Sgnalisierung auszulösen, wenn die erste Uhrzeit von der zweiten Uhrzeit um mehr als eine Schwellendifferenz abweicht. Die Schwellendifferenz kann eine unter anderem von den genutzten GNSS-Satellitensystemen abhängige zeitliche Konstante sein. Alternativ kann die Schwellendifferenz von vorausgehend bzw. in der Vergangenheit ermittelten ersten und zweiten Uhrzeiten abhängen.

Vorzugsweise werden das Erstsignal oder die Erstsignale und das Zweitsignal oder die Zweitsignale innerhalb eines Zeitrahmens von vorbestimmter Dauer empfangen. In diesem Fall kann von einer Zuordnung der Erstsignale zu den Zweitsignalen gesprochen werden. Dementsprechend sind auch die aus diesen Erstsignalen abgeleitete erste Uhrzeit und die aus diesen Zweitsignalen abgeleitete zweite Uhrzeit als einander zugeordnet oder zugehörig definiert.

Gemäß einer bevorzugten Ausführungsform ist vorgesehen, dass fortlaufend Erstsignale empfangen und daraus erste Uhrzeiten abgeleitet werden und/ oder fortlaufend Zweitsignale empfangen und daraus zweite Uhrzeiten abgeleitet werden, wobei die Schwellendifferenz aus einem paarweisen Vergleichen der ersten Uhrzeiten mit zugehörigen zweiten Uhrzeiten ermittelt wird. Hierbei kann die Schwellendifferenz aus einer Differenz zwischen einer ersten und einer zweiten abgeleiteten Uhrzeit abgeleitet sein oder aus einem Mittelwert der Differenzen zwischen ersten und zweiten Uhrzeiten über mehrere Messungen, beispielsweise über mindestens zwei oder drei Messungen, oder über die Messungen innerhalb eines bestimmten Zeitraumes, beispielsweise über einen Tag. Wie vorangehend erläutert, gelten eine erste Uhrzeit und eine zweite Uhrzeit einander zugehörig, wenn die ihnen zugrunde liegenden Erstsignale und Zweitsignale innerhalb eines Zeitrahmens mit vorgegebener Dauer empfangen wurden.

Das Ergebnis der Auswertung wird anschließend dazu verwendet, eine Entscheidung dahingehend zu treffen, dass eine Sgnalisierung ausgelöst wird. Es wird signalisiert, dass die Positionsbestimmungsvorrichtung einer Fehlfunktion unterliegt oder dass eine solche Fehlfunktion droht. Die Fehlfunktion kann insbesondere eine mangelnde Betriebsfähigkeit, beispielsweise ein Kalibrierungsfehler, der Positionsbestimmungsvorrichtung sein oder von einer solchen mangelnden Betriebsfähigkeit herrühren. Alternativ kann ein Eingriff in das System in Form eines Störsignals vorliegen. Ein Störsignal, beispielsweise in Form eines Rauschens oder in Form einzelner oder mehrerer frequenzvariabler oder frequenzinvariabler Träger auf einem oder mehreren Betriebsbändern, z.B. auf dem Betriebsband L1 beim GPS, wird als Jamming-Sgnal bezeichnet. Ein Störsignal in Form eines Täuschungssignals, das den Sgnalen mehrerer Navigationssatelliten entspricht, jedoch eine falsche Information trägt, die in einem GNSS-Empfänger zur Bestimmung einer anderen Position als der wahren Position führt, wird als Spoofing-Signal bezeichnet.

Zweckmäßigerweise wird in Abhängigkeit vom Ergebnis des Auswertens auch dann entschieden, dass eine Sgnalisierung ausgelöst wird, wenn die Positionsbestimmungsvorrichtung mittels Auswerten der Erstsignale und/ oder mittels Auswerten der Zweitsignale eine Positionsbestimmung durchführen kann. Mit anderen Worten kann die Sgnalisierung, dass eine Fehlfunktion der Positionsbestimmungsvorrichtung vorliegt oder droht, auch dann erfolgen, wenn die Positionsbestimmungsvorrichtung scheinbar weiterhin korrekt funktioniert, indem das empfangene GNSS-Signal zu einer validen Positionsbestimmung führt. Dies ist insbesondere dann von Vorteil, wenn eine drohende mangelnde Betriebsfähigkeit im Voraus erkannt und signalisiert wird.

Vorzugsweise werden die Verfahrensschritte zumindest teilweise in einer Zentraleinrichtung durchgeführt, welche mit der Positionsbestimmungsvorrichtung in Funkverbindung steht. Beispielsweise ist es möglich, dass die abgeleiteten ersten und/ oder zweiten Uhrzeiten an die Zentraleinrichtung übermittelt werden, wo ihre Auswertung erfolgt. Alternativ können auch die empfangenen Erst- und/ oder Zweitsignale an die Zentraleinrichtung übermittelt werden, so dass auch die Ableitung der entsprechenden Uhrzeiten zentral erfolgt.

Neben dem beschriebenen Verfahren werden erfindungsgemäß eine Reihe weiterer Komponenten vorgeschlagen, deren Eigenheiten und bevorzugte Ausführungsformen nachfolgend erläutert werden. Dies sind ein Sgnalisierungssystem, ein Gebührenerhebungssystem, eine Positionsbestimmungsvorrichtung und ein Computerprogrammprodukt. Es wird jedoch darauf hingewiesen, dass vorangehend im Zusammenhang mit dem Verfahren dargelegte Merkmale auch in besonderen Ausführungsformen des Sgnalisierungssystems, des Gebührenerhebungssystems, der Positionsbestimmungsvorrichtung und des Computerprogrammprodukts zur Anwendung kommen können und dort entsprechende Vorteile entfalten. Dies gilt auch umgekehrt für nachfolgend erläuterte Erzeugnismerkmale, die als Verfahrensmerkmale im erfindungsgemäßen Verfahren entsprechende Vorteile aufweisen.

Das Signalisierungssystem weist die Positionsbestimmungsvorrichtung mit dem GNSS-Empfänger auf. Zudem sind Ermittlungsmittel vorgesehen, welche ausgebildet sind, eine erste Uhrzeit aus den Erstsignalen und eine zweite Uhrzeit aus den Zweitsignalen abzuleiten. Weiterhin werden in einem Auswertungsmittel die erste Uhrzeit und/ oder die zweite Uhrzeit ausgewertet, vorzugsweise die erste und die zweite Uhrzeit miteinander verglichen, und ein Auswerteergebnis erzeugt. In Abhängigkeit vom Auswerteergebnis entscheidet dann ein Entscheidungsmittel über das Auslösen der Signalisierung über eine Fehlfunktion oder eine drohende Fehlfunktion, insbesondere über eine drohende mangelnde Betriebsfähigkeit, der Positionsbestimmungsvorrichtung. Das Signalisierungssystem kann insbesondere Teil eines Gebührenerhebungssystems sein.

Gemäß einer kompakten Ausführungsform ist das Auswertungsmittel oder das Entscheidungsmittel in der Positionsbestimmungsvorrichtung angeordnet. Es können auch sowohl das Auswertungsmittel als auch das Entscheidungsmittel in der Positionsbestimmungsvorrichtung angeordnet sein. Die Auswertung der Uhrzeit(en) und/ oder das Treffen der Entscheidung aufgrund des Auswerte-Ergebnisses erfolgen in diesem Fall in der Positionsbestimmungsvorrichtung. Dies ist insbesondere dann sinnvoll, wenn die Überwachung der im Straßenverkehr befindlichen Positionsbestimmungsvorrichtungen möglichst dezentral erfolgen soll.

Alternativ kann eines oder können beide abgeleiteten Uhrzeiten per Funk an eine Zentraleinrichtung des Sgnalisierungssystems bzw. des Gebührenerhebungssystems übermittelt werden. In diesem Fall weist die Positionsbestimmungsvorrichtung das Ermittlungsmittel und Funkmittel oder eine Funkvorrichtung auf. Das Auswertungsmittel und das Entscheidungsmittel sind dann Teil der Zentraleinrichtung. Die Zentraleinrichtung kann als eine Anordnung aus einem oder mehreren Rechnern ausgebildet sein, welche geographisch verteilt aufgestellt ist. Vorzugsweise kann eine Zentraleinrichtung über Funk mit mehreren Positionsbestimmungsvorrichtungen verbunden sein. Eine solche zentrale Auswertung der Uhrzeit(en) und darauf basierte Entscheidungsfindung hat den Vorteil, dass der Auswertealgorithmus auch zentral überarbeitet, optimiert und gewartet werden kann. Die Funkvorrichtung kann sich für die Kommunikation zwischen der Positionsbestimmungsvorrichtung und der Zentraleinrichtung eines Mobilfunkprotokolls bedienen, wie beispielsweise dem verbreiteten GSM-Standard (GSM - Global System for Mobile Communications).

Bevorzugterweise weist die Positionsbestimmungsvorrichtung eine Sgnalisierungsvorrichtung auf und ist ausgebildet, bei positiver Entscheidung des Entscheidungsmittels über das Auslösen der Sgnalisierung die Sgnalisierung auszulösen. Die Sgnalisierungsvorrichtung kann insbesondere Leuchtdioden (LEDs), ein Display und/ oder andere optische oder akustische Sgnalgeber umfassen, welche in der Lage sind, die Sgnalisierung dem Fahrzeugführer zu vermitteln. Alternativ oder zusätzlich kann die Sgnalisierungsvorrichtung Funkmittel aufweisen, über die ein Funksignal an eine externe Einrichtung übertragen wird. In diesem Fall gilt das Aussenden des Funksignals als Sgnalisierung. In der externen Einrichtung kann die Sgnalisierung dazu führen, dass eine Nachricht an den Fahrzeughalter versandt wird und/ oder dass andere notwendige Schritte zur Behebung des Problems der (drohenden) Fehlfunktion eingeleitet werden.

Gemäß einem weiteren Aspekt der Erfindung wird eine Positionsbestimmungsvorrichtung mit einem GNSS-Empfänger vorgeschlagen, welcher ausgebildet ist, Erstsignale eines ersten GNSS-Satellitensystems und Zweitsignale eines zweiten GNSS-Satellitensystems zu empfangen. Insbesondere kann der GNSS-Empfänger zweiteilig ausgebildet sein, mit einem ersten GNSS-Empfänger, welcher für den Empfang von Sgnalen des ersten GNSS-Satellitensystems ausgelegt ist, und einem zweiten GNSS-Empfänger, welcher für den Empfang von Sgnalen des zweiten GNSS-Satellitensystems ausgelegt ist. Alternativ kann der GNSS-Empfänger lediglich zwei Antennen aufweisen, welche jeweils für den Empfang von Sgnalen eines der beiden GNSS-Satellitensysteme ausgelegt sind.

Die Positionsbestimmungsvorrichtung weist zudem Ermittlungsmittel, welche ausgebildet sind, die erste Uhrzeit aus den Erstsignalen und die zweite Uhrzeit aus den Zweitsignalen abzuleiten, ein Auswertungsmittel, welches ausgebildet ist, aufgrund einer Auswertung, insbesondere eines Vergleichs, der beiden Uhrzeiten ein Auswerteergebnis zu erzeugen, und ein Entscheidungsmittel auf, welches ausgebildet ist, in Abhängigkeit vom Auswerteergebnis eine Sgnalisierung auszulösen.

Das vorangehend beschriebene Verfahren kann gänzlich oder in Teilen in einem Computerprogrammprodukt verwirklicht sein, das in einem Speicher und/ oder einem Prozessor der Positionsbestimmungsvorrichtung abgelegt ist. Das Computerprogrammprodukt kann auch zumindest teilweise auf der Zentraleinrichtung abgelegt sein, sofern eine solche vorgesehen ist.

Die Erfindung wird im Folgenden anhand von Ausführungsbeispielen unter Bezugnahme auf die Figuren erläutert. Hierbei zeigen:
- Fig. 1: eine schematische Darstellung einer erfindungsgemäßen Positionsbestimmungsvorrichtung;
- Fig. 2: eine schematische Darstellung eines erfindungsgemäßen Sgnalisierungssystems mit einer Positionsbestimmungsvorrichtung und einer Zentraleinrichtung; und
- Fig. 3: ein Diagramm einer Messreihe ermittelter erster und zweiter Uhrzeiten mit zwei auffälligen Messpunkten.

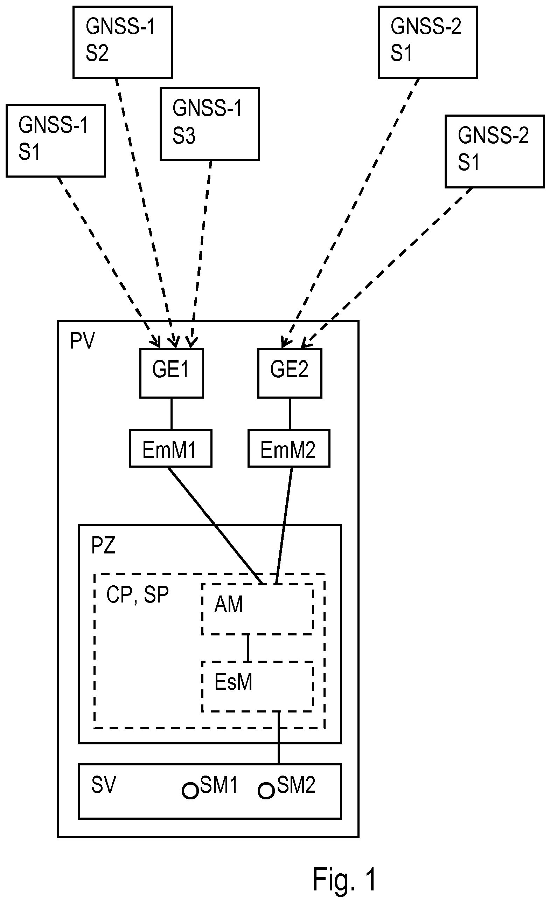

In der Fig. 1 wird eine Positionsbestimmungsvorrichtung PV gemäß einer erfindungsgemäßen Ausführungsform schematisch dargestellt. Die Positionsbestimmungsvorrichtung PV weist einen ersten GNSS-Empfänger GE1 für ein erstes GNSS-Satellitensystem GNSS-1 und einen zweiten GNSS-Empfänger GE2 für ein zweites GNSS-Satellitensystem GNSS-2 auf. Bei dem ersten GNSS-Satellitensystem GNSS-1 handelt es sich beispielsweise um ein GPS-Satellitensystem, so dass der erste GNSS-Empfänger GE1 als GPS-Empfänger ausgebildet ist. Bei dem zweiten GNSS-Satellitensystem GNSS-2 kann es sich dann um ein GLONASS-Satellitensystem handeln, so dass der zweite GNSS-Empfänger GE2 entsprechend als GLONASS-Empfänger ausgebildet sein muss.

Vorliegend wird für den Empfang der Sgnale aus den beiden GNSS-Satellitensystemen GNSS-1, GNSS-2, nämlich der Erstsignale des ersten GNSS-Satellitensystemens GNSS-1 und der Zweitsignale des zweiten GNSS-Satellitensystemens GNSS-2, jeweils ein eigener GNSS-Empfänger GE1, GE2 bereitgestellt. Die Sgnale dieser beiden GNSS-Satellitensysteme GNSS-1, GNSS-2 können jedoch auch von einem gemeinsamen GNSS-Empfänger empfangen werden, der für diese Aufgabe mehrere unterschiedliche Antennen und/ oder Empfänger-Schaltkreise aufweist. Der GNSS-Empfänger kann auch lediglich mit einer einzigen Empfangsantenne ausgestattet und ausgebildet sein, aus dem mittels der Empfangsantenne empfangenen Gesamtsignal Erstsignale und Zweitsignale auseinander zu filtern. Die beiden GNSS-Empfänger können auch in einem Gerät untergebracht sein, so dass dann von einem einzelnen GNSS Empfänger gesprochen wird, der imstande ist, Sgnale mehrerer GNSS-Satellitensysteme zu empfangen und auszuwerten.

Das erste GNSS-Satellitensystemen GNSS-1 weist mehrere GNSS-Navigationssatelliten GNSS-1 S1, GNSS-1 S2, GNSS-1 S3 auf, von denen hier drei schematisch Dargestellt sind. Auch das zweite GNSS-Satellitensystem GNSS-2 weist mehrere GNSS-Navigationssatelliten GNSS-2 S1, GNSS-2 S2 auf, von denen hier zwei schematisch dargestellt sind. Der erste GNSS-Empfänger GE1 weist eine hier nicht dargestellte Empfangsantenne auf und ist ausgebildet, Satellitensignale (als gestrichelte Pfeile veranschaulicht) von den ersten GNSS-Navigationssatelliten GNSS-1 S1, GNSS-1 S2, GNSS-1 S3 zu empfangen, aus den Satellitensignalen die darin übermittelten Satellitendaten zu extrahieren und diese zu analysieren, um eine aktuelle Position der Positionsbestimmungsvorrichtung PV zu ermitteln bzw. zu errechnen. In entsprechender Weise funktioniert der Empfang von Satellitensignalen (ebenfalls als gestrichelte Pfeile veranschaulicht) der zweiten GNSS-Navigationssatelliten GNSS-2 S1, GNSS-2 S2. Wie einleitend erläutert, können auch aus Satellitensignalen nur dreier oder zweier Navigationssatelliten eines GNSS-Satellitensystems unter bestimmten Voraussetzungen genaue Positionsdaten errechnet werden.

Für das hier beschriebene Verfahren zur Signalisierung einer Fehlfunktion oder drohenden Fehlfunktion der Positionsbestimmungsvorrichtung reicht es jedoch aus, dass aus den Erstsignalen eine erste Uhrzeit extrahiert wird. Dies erfolgt mittels eines ersten Ermittlungsmittels EmM1, welches in der Fig. 1 als eigenständiges Modul dargestellt ist, in der Regel jedoch Teil des ersten GNSS, Empfängers GE1 sein kann. Entsprechend wird das Zweitsignal bzw. werden die Zweitsignale der zweiten GNSS-Navigationssatelliten GNSS-2 S1, GNSS-2 S2 mittels eines zweiten Ermittlungsmittels EmM2 ausgewertet, um eine zweite Uhrzeit abzuleiten.

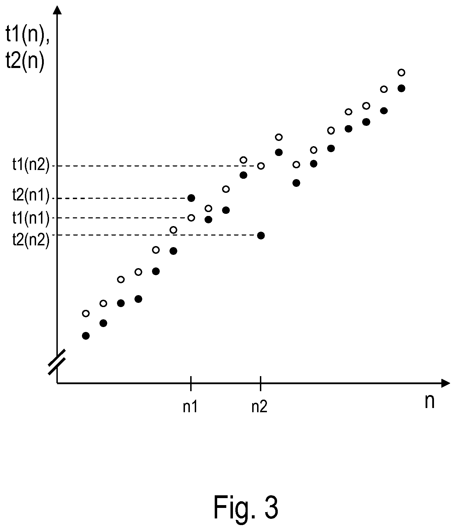

Weiterhin weist die Positionsbestimmungsvorrichtung PV einen Prozessor PZ mit einem Speicher SP auf, in dem ein Computerprogrammprodukt CP hinterlegt ist. Das Computerprogrammprodukt CP befindet sich in dem Speicher SP und wird zeitweise im und vom Prozessor PZ ausgeführt. Deshalb werden sowohl das Computerprogrammprodukt CP als auch der Speicher SP als ein Block im Prozessor PZ gestrichelt dargestellt. Als Teil des Computerprogrammprodukts CP sind im Speicher SP abgelegt bzw. laufen auf dem Prozessor PZ ein Auswertungsmittel AM und ein Entscheidungsmittel EsM. Diese sind ausgebildet, die abgeleiteten Uhrzeiten auszuwerten und aufgrund eines Ergebnisses der Auswertung zu entscheiden, ob eine Sgnalisierung ausgelöst wird, oder nicht. Die Sgnalisierung erfolgt dann, wenn aufgrund der Auswertung festgestellt bzw. ermittelt wurde, dass eine Fehlfunktion der Positionsbestimmungsvorrichtung PV vorliegt oder droht. Ein Beispiel für eine solche Auswertung wird weiter unten in Zusammenhang mit der Fig. 3 beschrieben.

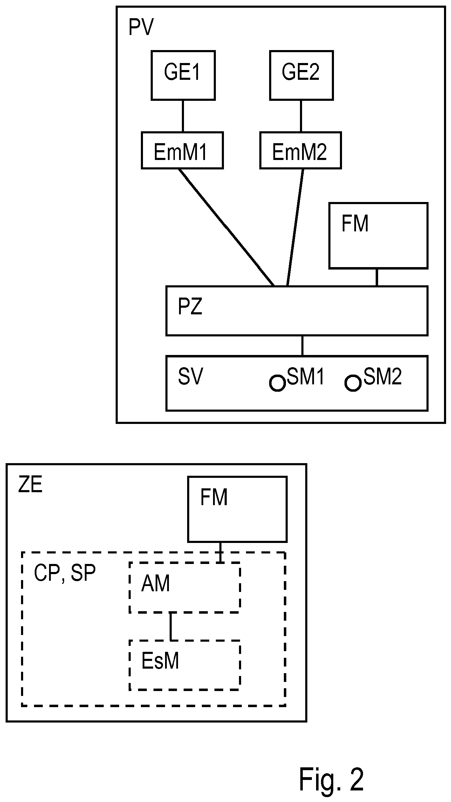

In der Fig. 2 wird eine alternative Ausführungsform der Positionsbestimmungsvorrichtung PV zusammen mit einer Zentraleinrichtung ZE schematisch dargestellt. Während die in Fig. 2 dargestellte Positionsbestimmungsvorrichtung PV weiterhin die GNSS-Empfänger GE1, GE2 und Ermittlungsmittel EmM1, EmM2 aufweist, um die GNSS-Sgnale zu empfangen und daraus die Uhrzeiten abzuleiten, sowie einen Prozessor zum Steuern der Komponenten der Positionsbestimmungsvorrichtung PV, sind das Auswertungsmittel AM und das Entscheidungsmittel EsM in Form eines Computerprogrammprodukts CP im Speicher SP der Zentraleinrichtung ZE abgelegt und laufen bzw. wirken dort. Die abgeleiteten ersten und zweiten Uhrzeiten, bei denen es sich insbesondere jeweils um die Systemzeit des jeweiligen GNSS handel n kann, werden von der Positionsbestimmungsvorrichtung PV mittels eines Funkmittels FM ausgesendet und mittels eines weiteren Funkmittels FM an der Zentraleinrichtung ZE empfangen.

Über die Funkmittel FM erfolgt auch eine Übermittlung des Ergebnisses der Auswertung der Uhrzeit oder der Uhrzeiten in der Zentraleinrichtung ZE zurück an die Positionsbestimmungsvorrichtung PV. Diese weist neben dem Funkmittel FM auch eine Sgnalisierungsvorrichtung SV mit Signalmitteln SM1, SM2 auf. Während das erste Sgnalmittel SM1 ein optischer Sgnalgeber wie beispielsweise eine LED ist, kann es sich bei dem zweiten Sgnalmittel SM2 um einen akustischen Sgnalgeber handeln. Ist das Ergebnis der Auswertung der Uhrzeit(en), dass eine Sgnalisierung ausgelöst werden muss, dann wird dies mittels der Funkmittel FM von der Zentraleinrichtung ZE an die Positionsbestimmungsvorrichtung PV mitgeteilt und daraufhin mittels der Sgnalmittel SM1, SM2 dem Benutzer der Positionsbestimmungsvorrichtung PV signalisiert.

Bei dem Benutzer der Positionsbestimmungsvorrichtung PV handelt es sich insbesondere um einen Fahrzeugführer oder Fahrzeughalter eines Fahrzeugs, in dem die Positionsbestimmungsvorrichtung PV als On-Board Unit (OBU) bzw. Fahrzeuggerät (FzG) oder als Teil eines solchen Gerätes installiert ist. Die Positionsbestimmungsvorrichtung PV ist zudem Teil eines Gebührenerhebungssystems. Se ist ausgebildet, die mittels des GNSS-Empfängers empfangenen Satellitensignale zu empfangen und fortlaufend die Position des Fahrzeuges zu berechnen. Auf Basis der berechneten Positionen kann ermittelt werden, welche gebührenpflichtigen Straßen, Straßenabschnitte, Verkehrsstrukturen etc. durch das Fahrzeug befahren wurden, um dies dem Fahrzeughalter in Rechnung stellen zu können.

Mittels der Sgnalisierungsvorrichtung SV wird dem Fahrzeugführer oder Fahrzeughalter signalisiert, dass eine Fehlfunktion, insbesondere ein Ausfall oder Störung, der Positionsbestimmungsvorrichtung PV vorliegt oder droht. Die Positionsbestimmungsvorrichtung PV gemäß Fig. 1 ist somit Teil eines erfindungsgemäßen Sgnalisierungssystems. Ebenso sind die Positionsbestimmungsvorrichtung PV und die Zentraleinrichtung ZE aus der Fig.2 Teil eines erfindungsgemäßen Sgnalisierungssystems gemäß einer alternativen Ausführungsform. Die in Fig. 2 gezeigte Zentraleinrichtung ZE kann als Teil des Signalisierungssystems mit mehreren Positionsbestimmungsvorrichtungen (nicht dargestellt) in Funkkontakt stehen, die jeweils in einem Fahrzeug angeordnet sind. Auf diese Weise ist es möglich, die Auswertung der Uhrzeiten für mehrere Positionsbestimmungsvorrichtungen in eine gemeinsame Zentraleinrichtung ZE auszulagern.

Wie vorangehend erläutert, erfolgt eine Auswertung der ersten Uhrzeit und der zweiten Uhrzeit, um ein Auswerteergebnis zu erhalten, aufgrund dessen dann entschieden wird, dass eine Sgnalisierung ausgelöst wird. Es genügt in bestimmten Fällen, wenn nur die beiden ermittelten Uhrzeiten mit einer internen oder externen Referenzzeit verglichen werden, die der Positionsbestimmungsvorrichtung z. B. von einer Atomuhr vorliegt. Erfindungsgemäß werden jedoch die erste und die zweite Uhrzeit miteinander verglichen, um eine Uhrzeitdifferenz zu ermitteln. Wenn diese Uhrzeitdifferenz eine Schwellendifferenz übersteigt, dann bedeutet dies, dass eine Fehlfunktion vorliegen oder in naher Zukunft drohen kann. In diesem Fall wird eine Sgnalisierung ausgelöst.

Vorzugsweise werden fortlaufend aus Erst- und Zweitsignalen erste und zweite Uhrzeiten ermittelt. Aus einer solchen Folge an ersten und zweiten Uhrzeiten kann dann eine Regeldifferenz ermittelt werden, bei dem es sich zumindest teilweise um eine systembedingte Differenz zwischen den Systemzeiten der beiden GNSShandeln kann. Ist eine solche Regeldifferenz ermittelt oder vorgegeben bzw. vorbekannt, dann kann das Auswertungsmittel AM die fortlaufend ermittelten Uhrzeiten beobachten, um Ausreißer-Paare zu erkennen. Hierbei handelt es sich insbesondere um Paare von ersten und zweiten Uhrzeiten, die um mehr als die aus der Regeldifferenz abgeleitete Schwellendifferenz voneinander abweichen, oder deren Uhrzeitdifferenz ein anderes Vorzeichen aufweist.

Dies soll nachfolgend anhand einer beispielhaften, fiktiven Messreihe oder Folge erster und zweiter Uhrzeiten veranschaulicht werden, die in der Fig. 3 dargestellt ist. Die ermittelten paarweisen ersten und zweiten Uhrzeiten sind in einem Diagramm aufgetragen. Entlang der Abszisse ist eine laufende Nummer n eingetragen, welche die Messpunkte der Messreihe fortlaufend markiert, und somit jedes Uhrzeit-Paar individuell kennzeichnet. Jedes Messereignis, bei dem eine erste Uhrzeit und zeitgleich eine zweite Uhrzeit ermittelt werden, wird also mit einer individuellen Nummer n markiert. Zu jeder laufenden Nummer n entlang der Abszisse gehören somit zwei ermittelte Uhrzeiten, nämlich die erste Uhrzeit, die aus den Erstsignalen des ersten GNSS-Satellitensystems ermittelt wurde, und die zweite Uhrzeit, die aus den Zweitsignalen des zweiten GNSS-Satellitensystems ermittelt wurde. Bei der ersten Uhrzeit kann es sich beispielsweise um eine aus den Ausgabedaten eines GPS-Empfängers entnehmbare Uhrzeit handeln. Handelsübliche GPS-Empfänger geben ihre Ergebnisse im NMEA-Format aus, dessen Datensatz die Uhrzeit als UTC mit Datum enthält. Entsprechendes gilt für die Ableitung der zweiten Uhrzeit.

Entlang der Ordinate sind die ermittelten ersten Uhrzeiten (t1(n), offene Kreise) und zweiten Uhrzeiten (t2(n), gefüllte Kreise) aufgetragen. Wie aus der Fig. 3 ersichtlich, unterscheiden sich die ersten und die zweiten Uhrzeiten bei den meisten Messereignissen um etwa den gleichen Betrag. In anderen Worten, weichen die beiden Uhrzeiten um einen Differenzwert voneinander ab, welcher sich nur wenig ändert. Wenngleich die Fig. 3 keine Einheit für die Ordinate angibt, liegt dieser Differenzwert in der Regel im Bereich von einer Sekunde oder weniger. Dieser übliche Differenzwert oder Regeldifferenz kann als Grundlage für die Bestimmung der oben erwähnten Schwellendifferenz genommen werden, bei dessen Überschreitung eine Sgnalisierung ausgelöst wird. Beispielsweise kann die Schwellendifferenz als Produkt eines Faktors größer als eins mit einer Regeldifferenz errechnet und gegebenenfalls regelmäßig aktualisiert werden, die dem Mittelwert einer vorgegebenen Anzahl von Differenzen zwischen der ersten und zweiten Uhrzeit zu verschiedenen Zeiten entsprechen.

Es gibt zwei Ausreißer in der in Fig. 3 dargestellten Folge: Während die ersten Uhrzeiten t1(n1) üblicherweise größer sind, als die zweiten Uhrzeiten t2(n1), ist dieses Verhältnis beim Messereignis mit der laufenden Nummer n1 umgekehrt. Dies kann als Hinweis darauf gesehen werden, dass eine Fehlfunktion vorliegt oder droht. Ein anderes in Fig. 3 gezeigtes Beispiel zeigt das Messereignis mit der laufenden Nummer n2. Dort macht die Differenz zwischen der ersten Uhrzeiten t1(n2) und der zweiten Uhrzeiten t2(n2) einen Sprung. Wenn diese Differenz größer ist, als eine Schwellendifferenz, dann kann auch das ein Hinweis für eine vorliegende oder drohende Fehlfunktion der Positionsbestimmungsvorrichtung PV sein. In jedem der beiden Fälle n1, n2 kann eine entsprechende Sgnalisierung ausgelöst werden.

### Bezugszeichenliste:

- AM: Auswertungsmittel
- CP: Computerprogrammprodukt
- EmM1: erstes Ermittlungsmittel
- EmM2: zweites Ermittlungsmittel
- EsM: Entscheidungsmittel
- FM: Funkmittel
- GE1: GNSS-Empfänger für erstes GNSS-Satellitensystem
- GE2: GNSS-Empfänger für zweites GNSS-Satellitensystem
- PV: Positionsbestimmungsvorrichtung
- PZ: Prozessor
- SM1: erstes Sgnalmittel
- SM2: zweites Sgnalmittel

- GNSS-1 S1, GNSS-1 S2, GNSS-1 S3: Navigationssatelliten des ersten GNSS-Satellitensystems

- GNSS-2 S1, GNSS-2 S2: Navigationssatelliten des zweiten GNSS-Satellitensystems

- SP: Speicher
- SV: Sgnalisierungsvorrichtung
- ZE: Zentraleinrichtung

## Patentansprüche

1. Verfahren zur Signalisierung einer Fehlfunktion oder drohenden Fehlfunktion einer mit zumindest einem GNSS-Empfänger (GE1, GE2) versehenen Positionsbestimmungsvorrichtung (PV), welches folgende Verfahrensschritte umfasst:
- Empfangen eines oder mehrerer Erstsignale eines ersten GNSS-Satellitensystems und Ableiten einer ersten Uhrzeit aus dem einen oder den mehreren Erstsignalen;
- Empfangen eines oder mehrerer Zweitsignale eines zweiten GNSS-Satellitensystems und Ableiten einer zweiten Uhrzeit aus dem einem oder den mehreren Zweitsignalen;
- Auswerten der ersten Uhrzeit und der zweiten Uhrzeit; und
- Entscheiden, dass eine Signalisierung ausgelöst wird, in Abhängigkeit vom Ergebnis des Auswertens, wobei
die erste Uhrzeit eine Systemzeit des ersten GNSS-Satellitensystems ist, die zweite Uhrzeit eine Systemzeit des zweiten GNSS-Satellitensystems ist oder aus einer solchen Systemzeit des zweiten GNSS-Satellitensystems abgeleitet wurde und das Auswerten der ersten Uhrzeit und der zweiten Uhrzeit ein Vergleichen der ersten Uhrzeit mit der zweiten Uhrzeit umfasst,
**dadurch gekennzeichnet, dass** entschieden wird, eine Signalisierung auszulösen, wenn die erste Uhrzeit von der zweiten Uhrzeit um mehr als eine Schwellendifferenz abweicht, wobei die in den Nutzdaten mit enthaltene Zeitinformation unmittelbar als erste Uhrzeit verwendet wird.

2. Verfahren nach Anspruch 1, wobei die erste Uhrzeit aus den Erstsignalen nur eines einzelnen Satelliten des ersten GNSS-Satellitensystems abgeleitet wird und/oder die zweite Uhrzeit aus den Zweitsignalen nur eines einzelnen Satelliten des zweiten GNSS-Satellitensystems abgeleitet wird.

3. Verfahren nach Anspruch 1 oder 2, wobei fortlaufend Erstsignale empfangen und daraus erste Uhrzeiten abgeleitet werden und/oder fortlaufend Zweitsignale empfangen und daraus zweite Uhrzeiten abgeleitet werden, wobei die Schwellendifferenz aus einem paarweisen Vergleichen der ersten Uhrzeiten mit zugehörigen der zweiten Uhrzeiten ermittelt wird.

4. Verfahren nach Anspruch 1 oder 2, wobeidas Empfangen des Erstsignals oder der Erstsignale, das Empfangen des Zweitsignals oder der Zweitsignale, das Ableiten der ersten Uhrzeit und/oder das Ableiten der zweiten Uhrzeit durch den Empfang eines von einer straßenseitigen Sendevorrichtung gesendeten Triggersignals getriggert wird.

5. Verfahren nach einem der vorangehenden Ansprüche, wobei in Abhängigkeit vom Ergebnis des Auswertens auch dann entschieden wird, dass eine Signalisierung ausgelöst wird, wenn die Positionsbestimmungsvorrichtung (PV) mittels Auswerten der Erstsignale und/oder mittels Auswerten der Zweitsignale eine Positionsbestimmung durchführen kann.

6. Verfahren nach einem der vorangehenden Ansprüche, wobei die Verfahrensschritte zumindest teilweise in einer Zentraleinrichtung (ZE) durchgeführt werden, welche mit der Positionsbestimmungsvorrichtung (PV) in Funkverbindung steht.

7. Signalisierungssystem zur Signalisierung einer Fehlfunktion oder drohenden Fehlfunktion einer mit zumindest einem GNSS-Empfänger (GE1, GE2) versehenen Positionsbestimmungsvorrichtung (PV), aufweisend:
- die Positionsbestimmungsvorrichtung (PV) mit dem GNSS-Empfänger (GE), welcher ausgebildet ist, ein oder mehrere Erstsignale eines ersten GNSS-Satellitensystems und ein oder mehrere Zweitsignale eines zweiten GNSS-Satellitensystems zu empfangen,
- Ermittlungsmittel (EmM1, EmM2), welche ausgebildet sind, eine erste Uhrzeit aus den Erstsignalen und eine zweite Uhrzeit aus den Zweitsignalen abzuleiten, wobei die erste Uhrzeit eine Systemzeit des ersten GNSS-Satellitensystems ist, und die zweite Uhrzeit eine Systemzeit des zweiten GNSS-Satellitensystems ist oder aus einer solchen Systemzeit des zweiten GNSS-Satellitensystems abgeleitet wurde,
- ein Auswertungsmittel (AM), welches ausgebildet ist, die erste Uhrzeit und die zweite Uhrzeit auszuwerten, wobei das Auswerten der ersten Uhrzeit und der zweiten Uhrzeit ein Vergleichen der ersten Uhrzeit mit der zweiten Uhrzeit umfasst, und ein Auswerteergebnis zu erzeugen, und
- ein Entscheidungsmittel (EsM), welches ausgebildet ist, in Abhängigkeit vom Auswerteergebnis über das Auslösen einer Signalisierung zu entscheiden
**dadurch gekennzeichnet, dass** die Ermittlungsmittel (EmM1, EmM2) ausgebildet sind, die in den Nutzdaten mit enthaltene Zeitinformation unmittelbar als erste Uhrzeit zu verwenden und dass das Entscheidungsmittel (EsM) ausgebildet ist, zu entscheiden, eine Signalisierung auszulösen, wenn die erste Uhrzeit von der zweiten Uhrzeit um mehr als eine Schwellendifferenz abweicht.

8. Signalisierungssystem nach Anspruch 7, wobei das Auswertungsmittel (AM) und/oder das Entscheidungsmittel (EsM) in der Positionsbestimmungsvorrichtung (PV) angeordnet sind/ist.

9. Signalisierungssystem nach Anspruch 7, **dadurch gekennzeichnet, dass** die Positionsbestimmungsvorrichtung (PV) die Ermittlungsmittel (EmM1, EmM2) und eine Funkvorrichtung aufweist, welche ausgebildet ist, die erste Uhrzeit und/oder die zweite Uhrzeit per Funk an eine Zentraleinrichtung (ZE) zu übermitteln, wobei die Zentraleinrichtung (ZE) das Auswertungsmittel (AM) und das Entscheidungsmittel (EsM) aufweist.

10. Signalisierungssystem nach einem der Ansprüche 7 bis 9, wobei die Positionsbestimmungsvorrichtung (PV) eine Signalisierungsvorrichtung (SV) aufweist und ausgebildet ist, bei positiver Entscheidung des Entscheidungsmittels (EsM) über das Auslösen der Signalisierung, die Signalisierung auszulösen.

11. Gebührenerhebungssystem mit einem Signalisierungssystem gemäß einem der Ansprüche 7 bis 10.

12. Positionsbestimmungsvorrichtung mit einem GNSS-Empfänger (GE), welcher ausgebildet ist, ein oder mehrere Erstsignale eines ersten GNSS-Satellitensystems und ein oder mehrere Zweitsignale eines zweiten GNSS-Satellitensystems zu empfangen, Ermittlungsmittel (EmM1, EmM2), welche ausgebildet sind, eine erste Uhrzeit aus dem Erstsignal oder den Erstsignalen und eine zweite Uhrzeit aus dem Zweitsignal oder den Zweitsignalen abzuleiten, einem Auswertungsmittel, welches ausgebildet ist, die erste Uhrzeit und die zweite Uhrzeit auszuwerten und ein Auswerteergebnis zu erzeugen, und einem Entscheidungsmittel (EsM), welches ausgebildet ist, in Abhängigkeit vom Auswerteergebnis eine Signalisierung auszulösen, wobei die erste Uhrzeit eine Systemzeit des ersten GNSS-Satellitensystems ist und die zweite Uhrzeit eine Systemzeit des zweiten GNSS-Satellitensystems ist oder aus einer solchen Systemzeit des zweiten GNSS-Satellitensystems abgeleitet wurde, wobei das Auswerten der ersten Uhrzeit und der zweiten Uhrzeit ein Vergleichen der ersten Uhrzeit mit der zweiten Uhrzeit umfasst, **dadurch gekennzeichnet, dass** die Ermittlungsmittel (EmM1, EmM2) ausgebildet sind, die in den Nutzdaten mit enthaltene Zeitinformation unmittelbar als erste Uhrzeit zu verwenden und dass das Entscheidungsmittel (EsM) ausgebildet ist, zu entscheiden, eine Signalisierung auszulösen, wenn die erste Uhrzeit von der zweiten Uhrzeit um mehr als eine Schwellendifferenz abweicht.

13. Computerprogrammprodukt (CP) zur Signalisierung einer Fehlfunktion oder drohenden Fehlfunktion einer mit zumindest einem GNSS-Empfänger (GE1, GE2) versehenen Positionsbestimmungsvorrichtung (PV), umfassend Befehle, die bei der Ausführung des Programms durch einen Computer diesen veranlassen, folgende Schritte durchzuführen:
- Auswerten einer aus einem oder mehreren Erstsignalen eines ersten GNSS-Satellitensystems abgeleiteten ersten Uhrzeit und/oder einer aus einem oder mehreren Zweitsignalen eines zweiten GNSS-Satellitensystems abgeleiteten zweiten Uhrzeit, wobei die erste Uhrzeit eine Systemzeit des ersten GNSS-Satellitensystems ist und die zweite Uhrzeit eine Systemzeit des zweiten GNSS-Satellitensystems ist oder aus einer solchen Systemzeit des zweiten GNSS-Satellitensystems abgeleitet wurde, wobei das Auswerten der ersten Uhrzeit und der zweiten Uhrzeit ein Vergleichen der ersten Uhrzeit mit der zweiten Uhrzeit umfasst; und
- Entscheiden, dass eine Signalisierung ausgelöst wird, in Abhängigkeit vom Ergebnis des Auswertens,
**dadurch gekennzeichnet, dass** entschieden wird, eine Signalisierung auszulösen, wenn die erste Uhrzeit von der zweiten Uhrzeit um mehr als eine Schwellendifferenz abweicht, wobei die in den Nutzdaten mit enthaltene Zeitinformation unmittelbar als erste Uhrzeit verwendet wird.

## Claims

1. A method for signaling a malfunction or imminent malfunction of a positioning device (PV) equipped with at least one GNSS receiver (GE1, GE2), which comprises the following method steps:
- receiving one or more initial signals of a first GNSS satellite system and deriving a first time from the one or more initial signals;
- receiving one or more secondary signals from a second GNSS satellite system and deriving a second time from the one or more secondary signals;
- evaluating the first time and the second time; and
- deciding that a signaling is triggered, depending on the result of the evaluation, wherein
the first time is a system time of the first GNSS satellite system, the second time is a system time of the second GNSS satellite system or has been derived from such a system time of the second GNSS satellite system, and the evaluation of the first time and the second time comprises a comparison of the first time with the second time, **characterized in that** it is decided to trigger a signaling if the first time deviates from the second time by more than one threshold difference, wherein the time information contained in the user data is used directly as the first time.

2. The method of claim 1, wherein the first time is derived from the initial signals of only a single satellite of the first GNSS satellite system and/or the second time is derived from the secondary signals of only a single satellite of the second GNSS satellite system.

3. The method according to claim 1 or 2, wherein initial signals are continuously received and first times are derived from them and/or secondary signals are continuously received and second times are derived from them, wherein the threshold difference is determined from a pairwise comparison of the first times with corresponding second times.

4. The method according to claim 1 or 2, wherein the reception of the initial signal or initial signals, the reception of the secondary signal or secondary signals, the derivation of the first time and/or the derivation of the second time is triggered by the reception of a trigger signal transmitted by a roadside transmitting device.

5. The method according to one of the preceding claims, wherein it is also decided, depending on the result of the evaluation, that signaling is triggered if the positioning device (PV) can perform a position determination by evaluating the initial signals and/or by evaluating the secondary signals.

6. The method according to one of the preceding claims, wherein the method steps are carried out, at least in part, in a central device (ZE) which is in radio communication with the positioning device (PV).

7. A signaling system for signaling a malfunction or imminent malfunction of a positioning device (PV) equipped with at least one GNSS receiver (GE1, GE2), having:
- the positioning device (PV) with the GNSS receiver (GE), which is designed to receive one or more initial signals from a first GNSS satellite system and one or more secondary signals from a second GNSS satellite system,
- determination means (EmM1, EmM2) which are designed to derive a first time from the initial signals and a second time from the secondary signals, wherein the first time is a system time of the first GNSS satellite system, and the second time is a system time of the second GNSS satellite system or was derived from such a system time of the second GNSS satellite system,
- an evaluation means (AM) which is designed to evaluate the first time and the second time, wherein the evaluation of the first time and the second time comprises a comparison of the first time with the second time, and to generate an evaluation result, and
- a decision-making means (EsM), which is designed to decide on the triggering of a signaling depending on the evaluation result
**characterized in that** the determination means (EmM1, EmM2) are designed to use the time information contained in the user data directly as the first time and that the decision-making means (EsM) is designed to decide to trigger a signaling if the first time deviates from the second time by more than a threshold difference.

8. The signaling system according to claim 7, wherein the evaluation means (AM) and/or the decision-making means (EsM) are/is arranged in the positioning device (PV).

9. The signaling system according to claim 7, **characterized in that** the positioning device (PV) has the determination means (EmM1, EmM2) and a radio device which is designed to transmit the first time and/or the second time by radio to a central device (ZE), wherein the central device (ZE) has the evaluation means (AM) and the decision-making means (EsM).

10. The signaling system according to any one of claims 7 to 9, wherein the positioning device (PV) has a signaling device (SV) and is designed to trigger the signaling in case of a positive decision of the decision-making means (EsM) on the triggering of the signaling.

11. A charging system with a signaling system according to any one of claims 7 to 10.

12. A positioning device with a GNSS receiver (GE) which is designed to receive one or more initial signals from a first GNSS satellite system and one or more secondary signals from a second GNSS satellite system, determination means (EmM1, EmM2) which are designed to derive a first time from the initial signal or initial signals and a second time from the secondary signal or secondary signals, an evaluation means which is designed to evaluate the first time and the second time and to generate an evaluation result, and a decision-making means (EsM) which is designed to trigger signaling depending on the evaluation result, wherein the first time is a system time of the first GNSS satellite system and the second time is a system time of the second GNSS satellite system or was derived from such a system time of the second GNSS satellite system, wherein the evaluation of the first time and the second time comprises a comparison of the first time with the second time, **characterized by** in that the determination means (EmM1, EmM2) are designed to use the time information contained in the user data directly as the first time and that the decision-making means (EsM) is designed to decide to trigger a signaling if the first time deviates from the second time by more than one threshold difference.

13. A computer program product (CP) for signaling a malfunction or imminent malfunction of a positioning device (PV) equipped with at least one GNSS receiver (GE1, GE2), comprising commands which, when executed by a computer, cause it to perform the following steps:
- evaluating a first time derived from one or more initial signals of a first GNSS satellite system and/or a second time derived from one or more secondary signals of a second GNSS satellite system, wherein the first time is a system time of the first GNSS satellite system and the second time is a system time of the second GNSS satellite system or derived from such a system time of the second GNSS satellite system; wherein the evaluation of the first time and the second time comprises a comparison of the first time with the second time; and
- deciding that a signaling is triggered, depending on the result of the evaluation,
**characterized in that** it is decided to trigger a signaling if the first time deviates from the second time by more than one threshold difference, wherein the time information contained in the user data is used directly as the first time.

## Revendications

1. Un procédé de signalisation d'un dysfonctionnement ou d'un dysfonctionnement imminent d'un dispositif de positionnement (PV) équipé d'au moins un récepteur GNSS (GE1, GE2), qui a des étapes de méthode suivantes :
- recevoir un ou plusieurs signaux initiaux d'un premier système GNSS à satellite et dériver une première heure dudit un ou desdits plusieurs signaux initiaux ;
- recevoir un ou plusieurs signaux secondaires d'un deuxième système GNSS à satellite et dériver une deuxième heure dudit un ou desdits plusieurs signaux secondaires ;
- évaluer la première heure et la deuxième heure ; et
- décider qu'une signalisation est déclenchée, en fonction du résultat de l'évaluation, dans le lequel
la première heure est l'heure du système du premier système GNSS à satellite, la deuxième heure est l'heure du système du deuxième système GNSS à satellite ou a été dérivée d'une telle heure du système du deuxième système GNSS à satellite, et l'évaluation de la première heure et de la deuxième heure comprend une comparaison de la première heure avec la deuxième heure,
**caractérisé en ce qu'**il est décidé de déclencher une signalisation si la première heure diffère de la deuxième heure de plus d'une différence de seuil, l'information temporelle contenue dans les données utiles étant utilisée directement comme la première heure.

2. Un procédé selon la revendication 1, dans lequel la première heure est dérivée des signaux initiaux d'un seul satellite du premier système GNSS à satellite et/ou la deuxième heure est dérivée des signaux secondaires d'un seul satellite du deuxième système GNSS à satellite.

3. Un procédé selon la revendication 1 ou 2, dans lequel les signaux initiaux sont reçus en continu et les premières heures en sont dérivés et/ou les signaux secondaires sont reçus en continu et les deuxièmes heures en sont dérivées, dans lequel la différence de seuil est déterminée à partir d'une comparaison par paires des premières heures avec les deuxièmes heures correspondantes.

4. Un procédé selon la revendication 1 ou 2, dans lequel la réception dudit un signal initial ou desdits signaux initiaux, la réception dudit un signal secondaire ou desdits signaux secondaires, la dérivation de la première heure et/ou la dérivation de la deuxième heure est déclenchée par la réception d'un signal de déclenchement transmis par un dispositif d'émission en bordure de route.

5. Un procédé selon l'une des revendications précédentes, dans lequel il est également décidé, en fonction du résultat de l'évaluation, que la signalisation est déclenchée si le dispositif de positionnement (PV) peut effectuer une détermination de position en évaluant les signaux initiaux et/ou en évaluant les signaux secondaires.

6. Un procédé selon l'une des revendications précédentes, dans lequel les étapes du procédé sont effectuées, au moins en partie, dans un dispositif central (ZE) qui est en communication radio avec le dispositif de positionnement (PV).

7. Un système de signalisation pour signaler un dysfonctionnement ou un dysfonctionnement imminent d'un dispositif de positionnement (PV) équipé d'au moins un récepteur GNSS (GE1, GE2) contenant :
- le dispositif de positionnement (PV) avec le récepteur GNSS (GE), qui est conçu pour recevoir un ou plusieurs signaux initiaux d'un premier système GNSS à satellite et un ou plusieurs signaux secondaires d'un deuxième système GNSS à satellite,
- les moyens de détermination (EmM1, EmM2) qui sont conçus à dériver une première heure à partir des signaux initiaux et une deuxième heure à partir des signaux secondaires, la première heure étant l'heure du système du premier système GNSS à satellite et la deuxième heure étant l'heure du système du deuxième système GNSS à satellite ou dérivée d'une telle heure du système du deuxième système GNSS à satellites,
- un moyen d'évaluation (AM) qui est conçu pour évaluer la première et la deuxième heure, dans lequel l'évaluation de la première heure et de la deuxième heure comprend une comparaison de la première heure avec la deuxième heure, et pour générer un résultat d'évaluation, et
- un moyen de décision (EsM) qui est conçu pour décider du déclenchement d'une signalisation en fonction du résultat de l'évaluation
caractérisé en que les moyens de détermination (EmM1, EmM2) sont conçus pour utiliser les informations de temps contenues dans les données utiles directement comme la première heure et que le moyen de décision (EsM) est conçu pour décider de déclencher une signalisation si la première heure diffère de la deuxième heure de plus d'un seuil de différence.

8. Le système de signalisation selon la revendication 7, dans lequel les moyens d'évaluation (AM) et/ou les moyens de décision (EsM) sont/est disposés dans le dispositif de positionnement (PV).

9. Le système de signalisation selon la revendication 7, **caractérisé en ce que** le dispositif de positionnement (PV) contient les moyens de détermination (EmM1, EmM2) et un dispositif radio qui est conçu pour transmettre la première heure et/ou la deuxième heure par radio à un dispositif central (ZE), dans lequel le dispositif central (ZE) contient les moyens d'évaluation (AM) et le moyen de décision (EsM).

10. Le système de signalisation selon l'une quelconque des revendications 7 à 9, dans lequel le dispositif de positionnement (PV) contient un dispositif de signalisation (SV) et est conçu pour déclencher la signalisation en cas de décision positive du moyen de décision (EsM) sur le déclenchement de la signalisation.

11. Un système de charge avec un système de signalisation selon l'une quelconque des revendications 7 à 10.

12. Un dispositif de positionnement avec un récepteur GNSS (GE) qui est conçu pour recevoir un ou plusieurs signaux initiaux d'un premier système GNSS à satellite et un ou plusieurs signaux secondaires d'un deuxième système GNSS à satellite, des moyens de détermination (EmM1, EmM2) qui sont conçus pour dériver une première heure du signal initial ou des signaux initiaux et une deuxième heure du signal secondaire ou des signaux secondaires, un moyen d'évaluation qui est conçu pour évaluer la première heure et la deuxième heure et pour générer un résultat d'évaluation, et un moyen de décision (EsM) qui est conçu pour déclencher la signalisation en fonction du résultat de l'évaluation, dans lequel la première heure est une heure système du premier système GNSS satellite et la deuxième heure est une heure système du deuxième système GNSS à satellite ou a été dérivée d'une telle heure système du deuxième système GNSS à satellite, dans lequel l'évaluation de la première heure et de la deuxième heure comprend une comparaison de la première heure avec la deuxième heure, **caractérisée** en que les moyens de détermination (EmM1, EmM2) sont conçu pour utiliser les informations de temps contenues dans les données utiles directement comme la première heure et que le moyen de décision (EsM) est conçu pour décider de déclencher une signalisation si la première heure diffère de la deuxième heure par plus d'une différence de seuil.

13. Un produit de programme d'ordinateur (CP) pour signaler un dysfonctionnement ou un dysfonctionnement imminent d'un dispositif de positionnement (PV) équipé d'au moins un récepteur GNSS (GE1, GE2), comprenant des commandes qui, lorsqu'elles sont exécutées par un ordinateur, l'amènent à effectuer les étapes suivantes :
- évaluer une première heure dérivée d'un ou de plusieurs signaux initiaux d'un premier système GNSS à satellite et/ou une deuxième heure dérivée d'un ou plusieurs signaux secondaires d'un deuxième système GNSS à satellite, la première heure étant l'heure du système du premier système GNSS à satellite et la deuxième heure étant l'heure du système du deuxième système GNSS à satellite ou dérivée d'une telle heure du système du deuxième système GNSS à satellite ; dans lequel l'évaluation de la première heure et de la deuxième heure comprend une comparaison de la première heure avec la deuxième heure ; et
- décider qu'une signalisation est déclenchée, en fonction du résultat de l'évaluation,
**caractérisé par le fait qu'**il est décidé de déclencher une signalisation si la première heure diffère de la deuxième heure de plus d'une différence de seuil, dans lequel l'information de temps contenue dans les données utiles étant utilisée directement comme la première heure.
